# EUROPEAN PATENT APPLICATION

(11) **EP 3 734 883 A1**
(43) Date of publication of application: **04.11.2020**
(21) Application number: 18894514.1
(22) Date of filing: 11.12.2018
(51) Int. Cl.: H04L 5/00

(54) **METHOD AND APPARATUS FOR TRANSMITTING UPLINK CONTROL INFORMATION**

(30) Priority: 29.12.2017 CN 201711480273
(71) Applicant: China Academy of Telecommunications Technology, Haidian District Beijing, 100191 (CN)
(72) Inventor: GAO, Xuejuan, Beijing 100191 (CN); TONY, Ekpenyong, Beijing 100191 (CN)
(74) Representative: Nony
(86) International application number: PCT/CN2018/120410
(87) International publication number: WO 2019/128706

(57) **Abstract**

Disclosed are a method and apparatus for transmitting uplink control information (UCI), for use in transmission of the UCI when different types of UCI are provided and transmission time domain resources thereof overlap. A method for transmitting the UCI provided in embodiments of the present application comprises: determining first UCI and second UCI required to be transmitted, a transmission time domain resource of the first UCI overlapping with that of the second UCI; and transmitting the UCI according to the relative position of the starting transmission time of the first UCI and the second UCI.

## Description

The present application claims priority to Chinese Patent Application No. 201711480273.0, filed with the Chinese Patent Office on December 29, 2017 and entitled "Method and Apparatus for transmitting Uplink Control Information", which is hereby incorporated by reference in its entirety.

### Field

The present application relates to the field of communication technologies, and particularly to a method and apparatus for transmitting uplink control information.

### Background

With the development of the mobile communication service demand, the International Telecommunication Union (ITU), the 3rd Generation Partnership Project (3GPP) and other organizations all begin to study the new wireless communication system, e.g., 5 Generation New RAT (5G NR) (RAT: Radio Access Technology).

In the current 5G NR, the Uplink Control Information (UCI) includes: Hybrid Automatic Repeat reQuest (HARQ) Acknowledge (i.e., HARQ-ACK), Scheduling Request (SR), Channel State Information (CSI), etc.

### Summary

The embodiment of the present application provide a method and apparatus for transmitting uplink control information, so as to transmit the UCI when there are different types of UCI required to be transmitted and the transmission time domain resources of the different types of UCI overlap.

A method for transmitting UCI according to an embodiment of the present application includes:
determining first UCI and second UCI that need to be transmitted, wherein a transmission time domain resource of the first UCI overlaps with a transmission time domain resource of the second UCI;
transmitting the UCI according to a relative position of start transmission times of the first UCI and the second UCI.

The first UCI and the second UCI that need to be transmitted are determined, wherein the transmission time domain resource of the first UCI overlaps with the transmission time domain resource of the second UCI; and the UCI is transmitted according to the relative position of the start transmission times of the first UCI and the second UCI, to thereby implement the UCI transmission when there are different types of UCI that needs to be transmitted and the transmission time domain resources of the different types of UCI overlap, so that the network side can obtain different types of UCI in time.

Optionally, the first UCI includes Hybrid Automatic Repeat reQuest Acknowledge (HARQ-ACK) and/or Scheduling Request (SR), the second UCI includes periodic Channel State Information (CSI) or semi-persistent CSI or aperiodic CSI, and the first UCI is configured to be transmitted with a first channel format or second channel format.

Optionally, transmitting the UCI according to the relative position of start transmission times of the first UCI and the second UCI includes:
when the start transmission time of the first UCI is behind the start transmission time of the second UCI:
discarding the second UCI; or discarding the CSI on an overlapped time domain resource between the transmission time domain resource of the CSI and the transmission time domain resource of the first UCI; or discarding the CSI from the overlapped time domain resource between the transmission time domain resource of the CSI and the transmission time domain resource of the first UCI to an end of the transmission time domain resource of the CSI;
transmitting the first UCI on a transmission resource of the first UCI.

Optionally, transmitting the UCI according to the relative position of start transmission times of the first UCI and the second UCI includes:
when the start transmission time of the first UCI is ahead of or equal to the start transmission time of the CSI, transmitting the first UCI and the CSI simultaneously.

Optionally, the transmitting the first UCI and the CSI simultaneously includes:
transmitting the first UCI and the CSI simultaneously on a transmission resource of the CSI with a channel format configured for the CSI.

Optionally, the first UCI is HARQ-ACK;
the second UCI includes periodic CSI and/or SR, or the second UCI includes semi-persistent CSI and/or SR, or the second UCI includes aperiodic CSI and/or SR;
the HARQ-ACK is configured to be transmitted with a third channel format or fourth channel format or fifth channel format.

Optionally, transmitting the UCI according to the relative position of start transmission times of the first UCI and the second UCI includes:
when the start transmission time of the HARQ-ACK is ahead of the start transmission time of the second UCI:
discarding the second UCI; or discarding the second UCI on an overlapped time domain resource between the transmission time domain resource of the second UCI and the transmission time domain resource of the HARQ-ACK; or discarding the second UCI from the overlapped time domain resource between the transmission time domain resource of the second UCI and the transmission time domain resource of the HARQ-ACK to an end of the transmission time domain resource of the second UCI;
transmitting the HARQ-ACK on a transmission resource of the HARQ-ACK.

Optionally, transmitting the UCI according to the relative position of start transmission times of the first UCI and the second UCI includes:
when the start transmission time of the HARQ-ACK is behind or is equal to the start transmission time of the second UCI, transmitting the HARQ-ACK and the second UCI simultaneously.

Optionally, transmitting the HARQ-ACK and the second UCI simultaneously includes:
transmitting the HARQ-ACK and the second UCI simultaneously on a transmission resource of the HARQ-ACK with a channel format configured for the HARQ-ACK.

Optionally, the CSI is configured to be transmitted with a third channel format or fourth channel format or fifth channel format.

Optionally, the first UCI is HARQ-ACK, the second UCI is SR, the HARQ-ACK is configured to be transmitted with a first channel format or second channel format, and the SR is configured to be transmitted with the second channel format.

Optionally, transmitting the UCI according to the relative position of start transmission times of the first UCI and the second UCI includes:
when the start transmission time of the HARQ-ACK is behind the start transmission time of the SR:
discarding the SR; or discarding the SR on an overlapped time domain resource between the transmission time domain resource of the SR and the transmission time domain resource of the HARQ-ACK; or discarding the SR from the overlapped time domain resource between the transmission time domain resource of the SR and the transmission time domain resource of the HARQ-ACK to an end of the transmission time domain resource of the SR;
transmitting the HARQ-ACK on a transmission resource of the HARQ-ACK.

Optionally, transmitting the UCI according to the relative position of start transmission times of the first UCI and the second UCI includes:
when the start transmission time of the HARQ-ACK is ahead of or equal to the start transmission time of the SR, transmitting the HARQ-ACK and the SR simultaneously.

Optionally, transmitting the HARQ-ACK and the SR simultaneously includes:
transmitting the HARQ-ACK on a transmission resource of the SR with a channel format configured for the SR.

Optionally, the first UCI is HARQ-ACK and the second UCI is SR;
the SR is configured to be transmitted with a first channel format and the HARQ-ACK is configured to be transmitted with a second channel format; or the HARQ-ACK is configured to be transmitted with the first channel format.

Optionally, transmitting the UCI according to the relative position of start transmission times of the first UCI and the second UCI includes:
when the start transmission time of the HARQ-ACK is ahead of the start transmission time of the SR:
discarding the SR; or discarding the SR on an overlapped time domain resource between the transmission time domain resource of the SR and the transmission time domain resource of the HARQ-ACK; or discarding the SR from the overlapped time domain resource between the transmission time domain resource of the SR and the transmission time domain resource of the HARQ-ACK to an end of the transmission time domain resource of the SR;
transmitting the HARQ-ACK on a transmission resource of the HARQ-ACK.

Optionally, transmitting the UCI according to the relative position of start transmission times of the first UCI and the second UCI includes:
when the start transmission time of the HARQ-ACK is behind or is equal to the start transmission time of the SR, transmitting the HARQ-ACK and the SR simultaneously.

Optionally, transmitting the HARQ-ACK and the SR simultaneously includes:
transmitting the HARQ-ACK on a first transmission resource with a channel format configured for the HARQ-ACK, wherein the first transmission resource is used for transmitting the HARQ-ACK when the SR is present, and the first transmission resource is different from a transmission resource for transmitting the HARQ-ACK when SR is not present.

Optionally, the SR is positive SR.

Optionally, the first channel format is PUCCH format 0; and/or, the second channel format is PUCCH format 1.

Optionally, the third channel format is PUCCH format 2; and/or, the fourth channel format is PUCCH format 3; and/or, the fifth channel format is PUCCH format 4.

An apparatus for transmitting UCI according to an embodiment of the present application includes:
a memory configured to store program instructions;
a processor configured to invoke the program instructions stored in the memory to perform the process of:
   determining first UCI and second UCI that need to be transmitted, wherein a transmission time domain resource of the first UCI overlaps with a transmission time domain resource of the second UCI;
   transmitting the UCI according to the relative position of start transmission times of the first UCI and the second UCI.

Optionally, the first UCI includes Hybrid Automatic Repeat reQuest Acknowledge (HARQ-ACK) and/or Scheduling Request (SR), the second UCI includes periodic Channel State Information (CSI) or semi-persistent CSI or aperiodic CSI, and the first UCI is configured to be transmitted with a first channel format or second channel format.

Optionally, the processor is configured to:
when the start transmission time of the first UCI is behind the start transmission time of the second UCI:
discard the second UCI; or discard the CSI on an overlapped time domain resource between the transmission time domain resource of the CSI and the transmission time domain resource of the first UCI; or discard the CSI from the overlapped time domain resource between the transmission time domain resource of the CSI and the transmission time domain resource of the first UCI to an end of the transmission time domain resource of the CSI;
transmit the first UCI on a transmission resource of the first UCI.

Optionally, the processor is configured to:
when the start transmission time of the first UCI is ahead of or equal to the start transmission time of the CSI, transmit the first UCI and the CSI simultaneously.

Optionally, the processor is configured to:
transmit the first UCI and the CSI simultaneously on a transmission resource of the CSI with a channel format configured for the CSI.

Optionally, the first UCI is HARQ-ACK, the second UCI includes periodic CSI and/or SR, or the second UCI includes semi-persistent CSI and/or SR, or the second UCI includes aperiodic CSI and/or SR, and the HARQ-ACK is configured to be transmitted with a third channel format or fourth channel format or fifth channel format.

Optionally, the processor is configured to:
when the start transmission time of the HARQ-ACK is ahead of the start transmission time of the second UCI:
discard the second UCI; or discard the second UCI on an overlapped time domain resource between the transmission time domain resource of the second UCI and the transmission time domain resource of the HARQ-ACK; or discard the second UCI from the overlapped time domain resource between the transmission time domain resource of the second UCI and the transmission time domain resource of the HARQ-ACK to an end of the transmission time domain resource of the second UCI;
transmit the HARQ-ACK on a transmission resource of the HARQ-ACK.

Optionally, the processor is configured to:
when the start transmission time of the HARQ-ACK is behind or is equal to the start transmission time of the second UCI, transmit the HARQ-ACK and the second UCI simultaneously.

Optionally, the processor is configured to:
transmit the HARQ-ACK and the second UCI simultaneously on a transmission resource of the HARQ-ACK with a channel format configured for the HARQ-ACK.

Optionally, the CSI is configured to be transmitted with a third channel format or fourth channel format or fifth channel format.

Optionally, the first UCI is HARQ-ACK, the second UCI is SR, the HARQ-ACK is configured to be transmitted with a first channel format or second channel format, and the SR is configured to be transmitted with the second channel format.

Optionally, the processor is configured to:
when the start transmission time of the HARQ-ACK is behind the start transmission time of the SR:
discard the SR; or discard the SR on an overlapped time domain resource between the transmission time domain resource of the SR and the transmission time domain resource of the HARQ-ACK; or discard the SR from the overlapped time domain resource between the transmission time domain resource of the SR and the transmission time domain resource of the HARQ-ACK to an end of the transmission time domain resource of the SR;
transmit the HARQ-ACK on a transmission resource of the HARQ-ACK.

Optionally, the processor is configured to:
when the start transmission time of the HARQ-ACK is ahead of or equal to the start transmission time of the SR, transmit the HARQ-ACK and the SR simultaneously.

Optionally, the processor is configured to:
transmit the HARQ-ACK on a transmission resource of the SR with a channel format configured for the SR.

Optionally, the first UCI is HARQ-ACK and the second UCI is SR;
the SR is configured to be transmitted with a first channel format and the HARQ-ACK is configured to be transmitted with a second channel format; or the HARQ-ACK is configured to be transmitted with the first channel format.

Optionally, the processor is configured to:
when the start transmission time of the HARQ-ACK is ahead of the start transmission time of the SR:
discard the SR; or discard the SR on an overlapped time domain resource between the transmission time domain resource of the SR and the transmission time domain resource of the HARQ-ACK; or discard the SR from the overlapped time domain resource between the transmission time domain resource of the SR and the transmission time domain resource of the HARQ-ACK to an end of the transmission time domain resource of the SR;
transmit the HARQ-ACK on a transmission resource of the HARQ-ACK.

Optionally, the processor is configured to:
when the start transmission time of the HARQ-ACK is behind or is equal to the start transmission time of the SR, transmit the HARQ-ACK and the SR simultaneously.

Optionally, the processor is configured to:
transmit the HARQ-ACK on a first transmission resource with a channel format configured for the HARQ-ACK, wherein the first transmission resource is used for transmitting the HARQ-ACK when the SR is present, and the first transmission resource is different from a transmission resource for transmitting the HARQ-ACK when SR is not present.

Optionally, the SR is positive SR.

Optionally, the first channel format is PUCCH format 0; and/or, the second channel format is PUCCH format 1.

Optionally, the third channel format is PUCCH format 2; and/or, the fourth channel format is PUCCH format 3; and/or, the fifth channel format is PUCCH format 4.

An apparatus for transmitting UCI according to an embodiment of the present application includes:
a first unit configured to determine first UCI and second UCI that need to be transmitted, wherein a transmission time domain resource of the first UCI overlaps with a transmission time domain resource of the second UCI;
a second unit configured to transmit the UCI according to a relative position of start transmission times of the first UCI and the second UCI.

Another embodiment of the present application provides a computer storage medium storing the computer executable instructions that, when executed by a computer, cause the computer to perform any one of the above methods.

### Brief Description of the Drawings

In order to illustrate the technical solutions in the embodiments of the present application more clearly, the accompanying figures which need to be used in describing the embodiments will be introduced below briefly. Obviously the accompanying figures described below are only some embodiments of the present application, and other accompanying figures can also be obtained by those ordinary skilled in the art according to these accompanying figures without creative labor.
Fig. 1 is a schematic flow diagram of a method for transmitting the UCI according to an embodiment of the present application;
Fig. 2 is a schematic structural diagram of an apparatus for transmitting the UCI according to an embodiment of the present application; and
Fig. 3 is a schematic structural diagram of another apparatus for transmitting the UCI according to an embodiment of the present application.

### Detailed Description

The embodiment of the present application provide a method and apparatus for transmitting uplink control information, so as to implement the UCI transmission when different types of UCI needs to be transmitted and the transmission time domain resources of the different types of UCI overlap.

In the 5G NR, the HARQ-ACK may be transmitted in the NR Physical Uplink Control CHannel (PUCCH) format 0 or format 1 or format 2 or format 3 or format 4, the Scheduling Request (SR) may be transmitted in the NR PUCCH format 0 or format 1, and the Channel State Information (CSI) may be transmitted in the NR PUCCH format 2 or format 3 or format 4. The CSI includes three types of CSI: periodic CSI, Semi-Persistent (SP) CSI and aperiodic CSI. The transmission resources and the PUCCH formats for different Uplink Control Information (UCI) are independently configured. There may be cases where the transmission time domain resources of different UCIs overlap but the start transmission times are not aligned.

In the NR system, a total of 5 PUCCH formats are defined, i.e., NR PUCCH formats 0, 1, 2, 3, 4, wherein the PUCCH format 0 or 1 may carry the UCI transmission of 1 bit to 2 bits, and the PUCCH format 2, 3 or 4 may carry the UCI transmission greater than 2 bits; the PUCCH format 0 or 2 belongs to the short PUCCH and occupies 1 symbol to 2 symbols for transmission, and the PUCCH format 1, 3 or 4 belongs to the long PUCCH and may occupy 4 to 14 symbols for transmission. The PUCCH format 0 is transmitted based on sequence, and there is no pilot. The PUCCH format 1 is transmitted based on data modulation and spread spectrum, there is a pilot, and the channel estimation needs to be performed based on the pilot, wherein the pilot symbols are at the even symbol positions in the symbols occupied by the PUCCH format 1, and the UCI symbols are at the odd symbol positions (assuming that the first symbol of which the number is 0 in the symbols occupied by PUCCH format 1 is used as the reference).

The SR may be transmitted in the PUCCH format 0 or 1. When the SR is configured to use the PUCCH format 0, if there is an SR (that is, positive SR) in the SR transmission opportunity (that is, transmission time domain resources), the base sequence is cyclically shifted based on a cyclic shift value pre-configured for the SR according to the high-level signaling to obtain a transmission sequence for transmitting on the configured Resource Block (RB). If there is no SR (negative SR) in the SR transmission opportunity (that is, transmission time domain resources), the SR is not transmitted. When the SR is configured to use the PUCCH format 1, if there is the positive SR in the SR transmission opportunity (that is, transmission time domain resources), a modulation symbol representing the SR is carried on the base sequence subjected to the cyclic shifting and time domain spread spectrum and is mapped to the PUCCH format 1 symbol used to transmit the UCI, and the pilot is mapped to the remaining symbols for transmission. If the SR is the negative SR, the SR is not transmitted.

The HARQ-ACK may use any of these five formats. When the HARQ-ACK is configured to use the PUCCH format 0, different HARQ-ACK feedback states are represented by different cyclic shift values. If the HARQ-ACK is 1 bit, there are two feedback states: acknowledgement {ACK} and non-acknowledgement {NACK}, two cyclic shift values are needed, and different cyclic shift values correspond to different HARQ-ACK feedback states. As shown in Table 1 below, wherein *Cᵢₙᵢₜₐₗ* is the pre-configured initial cyclic shift value, and the cyclic shift values corresponding to different HARQ-ACK feedback states may be obtained by this value plus a predetermined offset value. If the HARQ-ACK is 2 bits, there are four feedback states {ACK, ACK}, {NACK, ACK}, {ACK, NACK}, {NACK, NACK}, four cyclic shift values are needed, and different cyclic shift values correspond to different HARQ-ACK feedback states, as shown in Table 2 below. When the HARQ-ACK is configured to use the PUCCH format 1, the 1-bit HARQ-ACK to be transmitted is modulated by the BPSK or the 2-bit HARQ-ACK is modulated by the QPSK to obtain a modulation symbol, the modulation symbol is carried in the base sequence after the cyclic shifting and time domain spreading and is mapped to the PUCCH format 1 symbol used to transmit the UCI, and the pilot is mapped to the remaining symbols for transmission.

When the HARQ-ACK and/or CSI is/are configured to use the PUCCH format 2 or 3 or 4, the HARQ-ACK and/or CSI more than 2 bits to be transmitted is/are mapped to other PUCCH resources than the pilot after the channel encoding and rate matching.

**Table 1: cyclic shift mapping relationship of 1-bit HARQ-ACK**

| HARQ-ACK | NACK | ACK |
|---|---|---|
| Cyclic Shift | *Cᵢₙᵢₜₐₗ* | (*Cᵢₙᵢₜₐₗ* + 6) mod12 |

**Table 2: cyclic shift mapping relationship of 2-bit HARQ-ACK**

| HARQ-ACK | NACK, NACK | NACK, ACK | ACK, ACK | ACK, NACK |
|---|---|---|---|---|
| Cyclic Shift | *Cᵢₙᵢₜₐₗ* | (*Cᵢₙᵢₜₐₗ* + 3) mod12 | (*Cᵢₙᵢₜₐₗ* + 6) mod12 | (*Cᵢₙᵢₜₐₗ* + 9)mod12 |

In the NR system, different PUCCH formats have different transmission schemes. When the first UCI and the SR are configured with different NR PUCCH formats, or the first UCI and the SR are configured with the same format, but the transmission times are not aligned, (that is, the transmission time domain resources of the SR partially overlap with the transmission time domain resources of the first UCI), if the transmission time domain resources of the first UCI and the SR overlap, an embodiment of the present application provides the following technical solution for transmitting the first UCI and the SR. The first UCI, for example, may include HARQ-ACK and/or periodic CSI.

It should be noted that the transmission time domain resources described in the embodiments of the present application are symbols occupied by transmission, e.g., Single-carrier Frequency-Division Multiple Access (SC-FDMA) symbols or Discrete Fourier Transform-Spread-Orthogonal Frequency Division Multiplexing (DFT-S-OFDM) symbols or OFDM symbols or Cyclic Prefix Orthogonal Frequency Division Multiplexing (CP-OFDM) symbols, etc.

In the technical solution according to the embodiments of the present application, when the transmission time domain resources of different types of UCI (which may be referred to as different UCIs for short) overlap (may completely overlap or partially overlap; when they completely overlap, the start transmission times are aligned; when they partially overlap, the start transmission times are not aligned, the same below), the UCI that can be transmitted is determined at least based on the relative position of the start transmission times of different UCIs, and the UCI transmission is performed.

Four cases are listed and illustrated below respectively.

Case 1: when the first UCI is configured to use the PUCCH format 0 or 1, if the transmission time domain resource of the first UCI overlaps with the transmission time domain resource of the CSI.

When the start transmission time of the first UCI is behind the start transmission time of the CSI, the CSI is discarded; or the CSI is discarded in the overlapped time domain resource between the transmission time domain resource of the CSI and the transmission time domain resource of the first UCI (the CSI can be transmitted in the symbols other than the overlapped time domain resource in the transmission time domain resource of the CSI), or the CSI is discarded from the overlapped time domain resource between the transmission time domain resource of the CSI and the transmission time domain resource of the first UCI to the end of the transmission time domain resource of the CSI, that is, the CSI is not transmitted in the symbols from the overlapped time domain resource to the end of the transmission time domain resource of the CSI. That is, the first UCI is transmitted on the PUCCH resource corresponding to the first UCI.

Otherwise, when the start transmission time of the first UCI is ahead of or is the same as the start transmission time of the CSI, the first UCI and the CSI are transmitted simultaneously. Specifically, the first UCI and the CSI are transmitted simultaneously on the PUCCH format resource corresponding to the CSI.

The first UCI includes the HARQ-ACK and/or SR. The CSI includes at least one of the periodic CSI, SP-CSI and aperiodic CSI; wherein the CSI is configured to use the PUCCH format 2 or format 3 or format 4; wherein the SR is configured to use the PUCCH format 0 or format 1.

The PUCCH format configured for the HARQ-ACK and the PUCCH format configured for SR are the same or not necessarily the same; when the same PUCCH format is configured, the sizes of the time domain resources (i.e., the number of symbols corresponding to transmission) thereof are the same or not necessarily the same.

Case 2: when the HARQ-ACK is configured to use the PUCCH format 2 or format 3 or format 4, if the transmission time domain resource of the HARQ-ACK overlaps with the transmission time domain resource of the second UCI.

When the start transmission time of the HARQ-ACK is ahead of the start transmission time of the second UCI, the second UCI is discarded, or the second UCI is discarded in the overlapped time domain resource between the transmission time domain resource of the second UCI and the transmission time domain resource of the HARQ-ACK (the second UCI can be transmitted in the resource, other than the overlapped time domain resource, in the transmission time domain resource of the second UCI), or the second UCI is discarded from the overlapped time domain resource between the transmission time domain resource of the second UCI and the transmission time domain resource of the HARQ-ACK to an end of the transmission time domain resource of the second UCI, that is, the second UCI is not transmitted in the transmission resource from the overlapped time domain resource to the end of the transmission time domain resource of the second UCI.

That is, the HARQ-ACK is transmitted on the PUCCH resource corresponding to the HARQ-ACK.

Otherwise, when the start transmission time of the HARQ-ACK is behind or is the same as the start transmission time of the second UCI, the HARQ-ACK and the second UCI are transmitted simultaneously; and specifically, for example, the HARQ-ACK and the second UCI are transmitted simultaneously on the PUCCH format resource corresponding to the HARQ-ACK.

The second UCI includes the CSI and/or SR. The CSI includes at least one of the periodic CSI, SP-CSI and aperiodic CSI; the CSI is configured to use the PUCCH format 2 or format 3 or format 4; the SR is configured to use the PUCCH format 0 or format 1.

The PUCCH format configured for the HARQ-ACK and the PUCCH configured for CSI are the same or not necessarily the same; when the same PUCCH format is configured, the sizes of the time domain resources (i.e., the number of symbols corresponding to transmission) thereof are the same or not necessarily the same.

Case 3: when the HARQ-ACK is configured to use the PUCCH format 0 or 1 and the SR is configured to use the PUCCH format 1, if the transmission time domain resource of the HARQ-ACK overlaps with the transmission time domain resource of the SR.

When the start transmission time of the HARQ-ACK is behind the start transmission time of the SR, the SR is discarded, or the SR is discarded in the overlapped time domain resource between the transmission time domain resource of the SR and the HARQ-ACK (the SR can be transmitted in the resource, other than the overlapped time domain resource, in the transmission time domain resource of the SR), or the SR is discarded from the overlapped time domain resource between the transmission time domain resource of the SR and the HARQ-ACK to the end of the transmission time domain resource of the SR, that is, the SR is not transmitted from the first symbol of the overlapped time domain resource to the last symbol of the transmission time domain resource of the SR.

That is, the HARQ-ACK is transmitted on the PUCCH resource corresponding to the HARQ-ACK.

Otherwise, when the start transmission time of the HARQ-ACK is ahead of or is the same as the start transmission time of the SR, the HARQ-ACK and the SR are transmitted simultaneously. Specifically, for example, the HARQ-ACK is transmitted on the PUCCH format resource corresponding to the SR, that is, the HARQ-ACK is transmitted on the transmission time domain resource of the SR, which implicitly expresses that the positive SR transmission exists; wherein the SR is the positive SR; that is, if it is the negative SR, there is no need to transmit the SR, which is equivalent to no overlap between the transmission time domain resource of the SR and the transmission time domain resource of HARQ-ACK.

Case 4: when the HARQ-ACK is configured to use the PUCCH format 1 and the SR is configured to use the PUCCH format 0, or when the HARQ-ACK is configured to use the PUCCH format 0, if the transmission time domain resource of the HARQ-ACK overlaps with the transmission time domain resource of the SR.

When the start transmission time of the HARQ-ACK is ahead of the start transmission time of the SR, the SR is discarded, or the SR is discarded in the overlapped time domain resource between the transmission time domain resource of the SR and the transmission time domain resource of the HARQ-ACK (the SR can be transmitted in the resource, other than the overlapped time domain resource, in the transmission time domain resource of the SR), or the SR is discarded from the overlapped time domain resource between the transmission time domain resource of the SR and the transmission time domain resource of the HARQ-ACK to the end of the transmission time domain resource of the SR, that is, the SR is not transmitted from the first symbol of the overlapped time domain resource to the last symbol of the transmission time domain resource of the SR.

That is, the HARQ-ACK is transmitted on the PUCCH resource corresponding to the HARQ-ACK.

Otherwise, when the start transmission time of the HARQ-ACK is behind or is the same as the start transmission time of the SR, the HARQ-ACK and the SR are transmitted simultaneously. Specifically, for example, the HARQ-ACK is transmitted on the specific PUCCH format resource corresponding to the HARQ-ACK, wherein the specific PUCCH format resource is used to transmit the HARQ-ACK when the SR exists, and the specific PUCCH format resource is different from the PUCCH format resource used to transmit the HARQ-ACK when SR is not present.

The SR is configured to use the PUCCH format 0 or 1 when the HARQ-ACK is configured to use the PUCCH format 0.

The SR is the positive SR; that is, if it is the negative SR, there is no need to transmit the SR, which is equivalent to no overlap between the transmission time domain resource of the SR and the transmission time domain resource of HARQ-ACK.

The above method is applicable to both the user equipment and the base station; the user equipment determines the UCI that needs to be transmitted according to the above method and transmits the UCI, and the base station determines the UCI that needs to be transmitted according to the above method and receives the UCI.

Optionally, for any type of UCI described above, the PUCCH format configured for this type of UCI is used for transmission, that is, the PUCCH formats of various types of UCI are independently configured.

Optionally, in the above case 1 and case 2, when the PUCCH format 2 or 3 or 4 is used to transmit multiple types of UCI simultaneously, if only the HARQ-ACK and SR exist, the 1-bit SR and the HARQ-ACK are cascaded together and mapped to the corresponding PUCCH resource for transmission after the joint coding and rate matching; if the CSI exists and the CSI is not divided into a first part and a second part or only the first part of the CSI exists, then: when the total number of bits of the HARQ-ACK and/or SR and CSI exceeds the maximum number of UCI bits that can be transmitted according to the configured code rate and the corresponding PUCCH resource size, all or a part of the CSI is discarded until the total number of UCI bits to be transmitted does not exceed the maximum number of UCI bits; if the CSI exists and the CSI is divided into a first part and a second part, the resource occupied by the HARQ-ACK and/or SR and the first part of the CSI in the corresponding PUCCH resource is determined according to the configured code rate, the HARQ-ACK and/or SR and the first part of the CSI are cascaded together and mapped to the resource occupied by the HARQ-ACK and/or SR and the first part of the CSI for transmission after the joint coding and rate matching, and the second part of the CSI is mapped to the remaining PUCCH resource except for the resource occupied by the HARQ-ACK and/or SR and the first part of the CSI in the corresponding PUCCH resource after the coding and rate matching. If there are no remaining resource or insufficient remaining resource, the second part of the CSI is not transmitted.

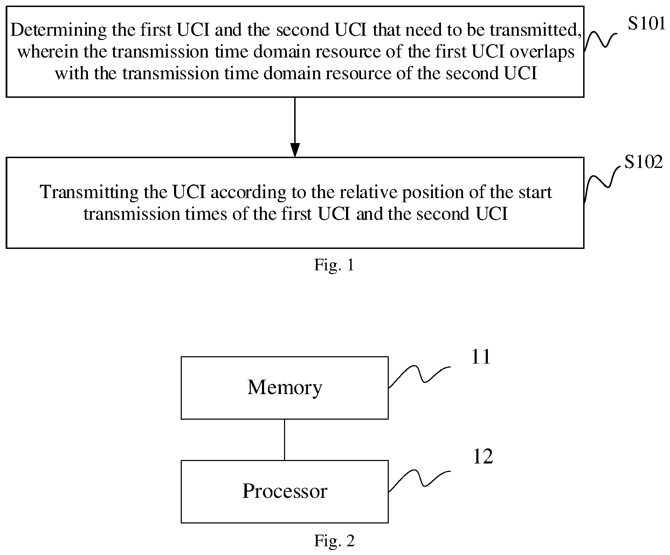

In summary, referring to Fig. 1, a method for transmitting UCI according to an embodiment of the present application includes the following steps.

S101: determining the first UCI and the second UCI that need to be transmitted, wherein the transmission time domain resource of the first UCI overlaps with the transmission time domain resource of the second UCI.

It should be noted that both the first UCI and the second UCI may contain multiple types of UCI but not limited to one type of UCI, and there may also be overlapped time domain resource among transmission time domain resources of these multiple types of UCI.

S102: transmitting the UCI according to the relative position of the start transmission times of the first UCI and the second UCI.

The method according to the embodiment of the present application may be applicable to the UE side or the network side, e.g., base station side. At the UE side, the method for transmitting UCI is a method for transmitting UCI, and correspondingly, at the network side, the method for transmitting UCI is a method for receiving UCI.

The first UCI and the second UCI that need to be transmitted are determined, wherein the transmission time domain resource of the first UCI overlaps with the transmission time domain resource of the second UCI; and the UCI is transmitted according to the relative position of the start transmission times of the first UCI and the second UCI, to thereby transmit the UCI in the case that there are different types of UCI that need to be transmitted and the transmission time domain resources of the different types of UCI overlap, so that the network side can obtain different types of UCI timely.

Optionally, the first UCI includes Hybrid Automatic Repeat reQuest Acknowledge (HARQ-ACK) and/or Scheduling Request (SR), the second UCI includes periodic Channel State Information (CSI) or semi-persistent CSI or aperiodic CSI, and the first UCI is configured to be transmitted with a first channel format or second channel format.

The HARQ-ACK described in the embodiments of the present application is the HARQ feedback information, and may be acknowledgement (ACK) or non-acknowledgement (NACK).

Optionally, transmitting the UCI according to the relative position of the start transmission times of the first UCI and the second UCI includes:
when the start transmission time of the first UCI is behind the start transmission time of the second UCI:
discarding the second UCI; or discarding the CSI on the overlapped time domain resource between the transmission time domain resource of the CSI and the transmission time domain resource of the first UCI; or discarding the CSI from the overlapped time domain resource between the transmission time domain resource of the CSI and the transmission time domain resource of the first UCI to the end of the transmission time domain resource of the CSI;
transmitting the first UCI on the transmission resource of the first UCI.

Optionally, transmitting the UCI according to the relative position of the start transmission times of the first UCI and the second UCI includes:
when the start transmission time of the first UCI is ahead of or equal to the start transmission time of the CSI, transmitting the first UCI and the CSI simultaneously.

Optionally, the transmitting the first UCI and the CSI simultaneously includes:
transmitting the first UCI and the CSI simultaneously on the transmission resource of the CSI with a channel format configured for the CSI.

Optionally, the first UCI is HARQ-ACK, the second UCI includes periodic CSI and/or SR, or the second UCI includes semi-persistent CSI and/or SR, or the second UCI includes aperiodic CSI and/or SR, and the HARQ-ACK is configured to be transmitted with a third channel format or fourth channel format or fifth channel format.

Optionally, transmitting the UCI according to the relative position of the start transmission times of the first UCI and the second UCI includes:
when the start transmission time of the HARQ-ACK is ahead of the start transmission time of the second UCI:
discarding the second UCI; or discarding the second UCI on the overlapped time domain resource between the transmission time domain resource of the second UCI and the transmission time domain resource of the HARQ-ACK; or discarding the second UCI from the overlapped time domain resource between the transmission time domain resource of the second UCI and the transmission time domain resource of the HARQ-ACK to the end of the transmission time domain resource of the second UCI;
transmitting the HARQ-ACK on the transmission resource of the HARQ-ACK.

Optionally, transmitting the UCI according to the relative position of the start transmission times of the first UCI and the second UCI includes:
when the start transmission time of the HARQ-ACK is behind or is equal to the start transmission time of the second UCI, transmitting the HARQ-ACK and the second UCI simultaneously.

Optionally, transmitting the HARQ-ACK and the second UCI simultaneously includes:
transmitting the HARQ-ACK and the second UCI simultaneously on the transmission resource of the HARQ-ACK with a channel format configured for the HARQ-ACK.

Optionally, the CSI is configured to be transmitted with a third channel format or fourth channel format or fifth channel format.

Optionally, the first UCI is HARQ-ACK, the second UCI is SR, the HARQ-ACK is configured to be transmitted with a first channel format or second channel format, and the SR is configured to be transmitted with the second channel format.

Optionally, transmitting the UCI according to the relative position of the start transmission times of the first UCI and the second UCI includes:
when the start transmission time of the HARQ-ACK is behind the start transmission time of the SR:
discarding the SR; or discarding the SR on the overlapped time domain resource between the transmission time domain resource of the SR and the transmission time domain resource of the HARQ-ACK; or discarding the SR from the overlapped time domain resource between the transmission time domain resource of the SR and the transmission time domain resource of the HARQ-ACK to the end of the transmission time domain resource of the SR;
transmitting the HARQ-ACK on the transmission resource of the HARQ-ACK.

Optionally, transmitting the UCI according to the relative position of the start transmission times of the first UCI and the second UCI includes:
when the start transmission time of the HARQ-ACK is ahead of or equal to the start transmission time of the SR, transmitting the HARQ-ACK and the SR simultaneously.

Optionally, transmitting the HARQ-ACK and the SR simultaneously includes:
transmitting the HARQ-ACK on the transmission resource of the SR with a channel format configured for the SR.

Optionally, the first UCI is HARQ-ACK and the second UCI is SR;
the SR is configured to be transmitted with a first channel format and the HARQ-ACK is configured to be transmitted with a second channel format; or the HARQ-ACK is configured to be transmitted with the first channel format.

Optionally, transmitting the UCI according to the relative position of the start transmission times of the first UCI and the second UCI includes:
when the start transmission time of the HARQ-ACK is ahead of the start transmission time of the SR:
discarding the SR; or discarding the SR on the overlapped time domain resource between the transmission time domain resource of the SR and the transmission time domain resource of the HARQ-ACK; or discarding the SR from the overlapped time domain resource between the transmission time domain resource of the SR and the transmission time domain resource of the HARQ-ACK to the end of the transmission time domain resource of the SR;
transmitting the HARQ-ACK on the transmission resource of the HARQ-ACK.

Optionally, transmitting the UCI according to the relative position of the start transmission times of the first UCI and the second UCI includes:
when the start transmission time of the HARQ-ACK is behind or is equal to the start transmission time of the SR, transmitting the HARQ-ACK and the SR simultaneously.

Optionally, transmitting the HARQ-ACK and the SR simultaneously includes:
transmitting the HARQ-ACK on first transmission resource with a channel format configured for the HARQ-ACK, wherein the first transmission resource is used for transmitting the HARQ-ACK when the SR is present, and the first transmission resource is different from a transmission resource for transmitting the HARQ-ACK when SR is not present.

Optionally, the SR is positive SR.

Optionally, the first channel format is PUCCH format 0; and/or, the second channel format is PUCCH format 1.

Optionally, the third channel format is PUCCH format 2; and/or, the fourth channel format is PUCCH format 3; and/or, the fifth channel format is PUCCH format 4.

The transmission resource described in the embodiments of the present application includes, for example, time domain resources, frequency domain resources and other resources, or may include code domain resources, e.g., cyclic shift, OCC or the like.

Referring to Fig. 2, an apparatus for transmitting UCI according to an embodiment of the present application includes:
a memory 11 configured to store program instructions;
a processor 12 configured to invoke the program instructions stored in the memory, and in accordance with the obtained program, perform the process of:
   determining the first UCI and the second UCI that need to be transmitted, wherein the transmission time domain resource of the first UCI overlaps with the transmission time domain resource of the second UCI;
   transmitting the UCI according to the relative position of the start transmission times of the first UCI and the second UCI.

Optionally, the first UCI includes Hybrid Automatic Repeat reQuest Acknowledge (HARQ-ACK) and/or Scheduling Request (SR), the second UCI includes periodic Channel State Information (CSI) or semi-persistent CSI or aperiodic CSI, and the first UCI is configured to be transmitted with a first channel format or second channel format.

Optionally, the processor 12 is configured to:
when the start transmission time of the first UCI is behind the start transmission time of the second UCI:
discard the second UCI; or discard the CSI on the overlapped time domain resource between the transmission time domain resource of the CSI and the transmission time domain resource of the first UCI; or discard the CSI from the overlapped time domain resource between the transmission time domain resource of the CSI and the transmission time domain resource of the first UCI to the end of the transmission time domain resource of the CSI;
transmit the first UCI on the transmission resource of the first UCI.

Optionally, the processor 12 is configured to:
when the start transmission time of the first UCI is ahead of or equal to the start transmission time of the CSI, transmit the first UCI and the CSI simultaneously.

Optionally, the processor 12 is configured to:
transmit the first UCI and the CSI simultaneously on the transmission resource of the CSI with a channel format configured for the CSI.

Optionally, the first UCI is HARQ-ACK, the second UCI includes periodic CSI and/or SR, or the second UCI includes semi-persistent CSI and/or SR, or the second UCI includes aperiodic CSI and/or SR, and the HARQ-ACK is configured to be transmitted with a third channel format or fourth channel format or fifth channel format.

Optionally, the processor 12 is configured to:
when the start transmission time of the HARQ-ACK is ahead of the start transmission time of the second UCI:
discard the second UCI; or discard the second UCI on the overlapped time domain resource between the transmission time domain resource of the second UCI and the transmission time domain resource of the HARQ-ACK; or discard the second UCI from the overlapped time domain resource between the transmission time domain resource of the second UCI and the transmission time domain resource of the HARQ-ACK to the end of the transmission time domain resource of the second UCI;
transmit the HARQ-ACK on the transmission resource of the HARQ-ACK.

Optionally, the processor 12 is configured to:
when the start transmission time of the HARQ-ACK is behind or is equal to the start transmission time of the second UCI, transmit the HARQ-ACK and the second UCI simultaneously.

Optionally, the processor 12 is configured to:
transmit the HARQ-ACK and the second UCI simultaneously on the transmission resource of the HARQ-ACK with a channel format configured for the HARQ-ACK.

Optionally, the CSI is configured to be transmitted with a third channel format or fourth channel format or fifth channel format.

Optionally, the first UCI is HARQ-ACK, the second UCI is SR, the HARQ-ACK is configured to be transmitted with a first channel format or second channel format, and the SR is configured to be transmitted with the second channel format.

Optionally, the processor 12 is configured to:
when the start transmission time of the HARQ-ACK is behind the start transmission time of the SR:
discard the SR; or discard the SR on the overlapped time domain resource between the transmission time domain resource of the SR and the transmission time domain resource of the HARQ-ACK; or discard the SR from the overlapped time domain resource between the transmission time domain resource of the SR and the transmission time domain resource of the HARQ-ACK to the end of the transmission time domain resource of the SR;
transmit the HARQ-ACK on the transmission resource of the HARQ-ACK.

Optionally, the processor 12 is configured to:
when the start transmission time of the HARQ-ACK is ahead of or equal to the start transmission time of the SR, transmit the HARQ-ACK and the SR simultaneously.

Optionally, the processor 12 is configured to:
transmit the HARQ-ACK on the transmission resource of the SR with a channel format configured for the SR.

Optionally, the first UCI is HARQ-ACK and the second UCI is SR;
the SR is configured to be transmitted with a first channel format and the HARQ-ACK is configured to be transmitted with a second channel format; or the HARQ-ACK is configured to be transmitted with the first channel format.

Optionally, the processor 12 is configured to:
when the start transmission time of the HARQ-ACK is ahead of the start transmission time of the SR:
discard the SR; or discard the SR on the overlapped time domain resource between the transmission time domain resource of the SR and the transmission time domain resource of the HARQ-ACK; or discard the SR from the overlapped time domain resource between the transmission time domain resource of the SR and the transmission time domain resource of the HARQ-ACK to the end of the transmission time domain resources of the SR;
transmit the HARQ-ACK on the transmission resource of the HARQ-ACK.

Optionally, the processor 12 is configured to:
when the start transmission time of the HARQ-ACK is behind or is equal to the start transmission time of the SR, transmit the HARQ-ACK and the SR simultaneously.

Optionally, the processor 12 is configured to:
transmit the HARQ-ACK on a first transmission resource with a channel format configured for the HARQ-ACK, wherein the first transmission resource is used for transmitting the HARQ-ACK when the SR is present, and the first transmission resource is different from a transmission resource for transmitting the HARQ-ACK when SR is not present.

Optionally, the SR is positive SR.

Optionally, the first channel format is PUCCH format 0; and/or, the second channel format is PUCCH format 1.

Optionally, the third channel format is PUCCH format 2; and/or, the fourth channel format is PUCCH format 3; and/or, the fifth channel format is PUCCH format 4.

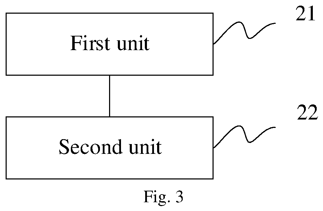

Referring to Fig. 3, another apparatus for transmitting UCI according to an embodiment of the present application includes:
a first unit 21 configured to determine the first UCI and the second UCI that need to be transmitted, wherein the transmission time domain resource of the first UCI overlaps with the transmission time domain resource of the second UCI;
a second unit 22 configured to transmit the UCI according to the relative position of the start transmission times of the first UCI and the second UCI.

Optionally, the first UCI includes Hybrid Automatic Repeat reQuest Acknowledge (HARQ-ACK) and/or Scheduling Request (SR), the second UCI includes periodic Channel State Information (CSI) or semi-persistent CSI or aperiodic CSI, and the first UCI is configured to be transmitted with a first channel format or second channel format.

Optionally, the second unit 22 is specifically configured to:
when the start transmission time of the first UCI is behind the start transmission time of the second UCI:
discard the second UCI; or discard the CSI on the overlapped time domain resource between the transmission time domain resource of the CSI and the transmission time domain resource of the first UCI; or discard the CSI from the overlapped time domain resource between the transmission time domain resource of the CSI and the transmission time domain resource of the first UCI to the end of the transmission time domain resource of the CSI;
transmit the first UCI on the transmission resource of the first UCI.

Optionally, the second unit 22 is configured to:
when the start transmission time of the first UCI is ahead of or equal to the start transmission time of the CSI, transmit the first UCI and the CSI simultaneously.

Optionally, the second unit 22 is configured to:
transmit the first UCI and the CSI simultaneously with a channel format configured for the CSI on the transmission resource of the CSI.

Optionally, the first UCI is HARQ-ACK;
the second UCI includes periodic CSI and/or SR, or the second UCI includes semi-persistent CSI and/or SR, or the second UCI includes aperiodic CSI and/or SR;
the HARQ-ACK is configured to be transmitted with a third channel format or fourth channel format or fifth channel format.

Optionally, the second unit 22 is configured to:
when the start transmission time of the HARQ-ACK is ahead of the start transmission time of the second UCI:
discard the second UCI; or discard the second UCI on the overlapped time domain resource between the transmission time domain resource of the second UCI and the transmission time domain resource of the HARQ-ACK; or discard the second UCI from the overlapped time domain resource between the transmission time domain resource of the second UCI and the transmission time domain resource of the HARQ-ACK to the end of the transmission time domain resource of the second UCI;
transmit the HARQ-ACK on the transmission resource of the HARQ-ACK.

Optionally, the second unit 22 is configured to:
when the start transmission time of the HARQ-ACK is behind or is equal to the start transmission time of the second UCI, transmit the HARQ-ACK and the second UCI simultaneously.

Optionally, the second unit 22 is configured to:
transmit the HARQ-ACK and the second UCI simultaneously on the transmission resource of the HARQ-ACK with a channel format configured for the HARQ-ACK.

Optionally, the CSI is configured to be transmitted with a third channel format or fourth channel format or fifth channel format.

Optionally, the first UCI is HARQ-ACK, the second UCI is SR, the HARQ-ACK is configured to be transmitted with a first channel format or second channel format, and the SR is configured to be transmitted with the second channel format.

Optionally, the second unit 22 is configured to:
when the start transmission time of the HARQ-ACK is behind the start transmission time of the SR:
discard the SR; or discard the SR on the overlapped time domain resource between the transmission time domain resource of the SR and the transmission time domain resource of the HARQ-ACK; or discard the SR from the overlapped time domain resource between the transmission time domain resource of the SR and the transmission time domain resource of the HARQ-ACK to the end of the transmission time domain resource of the SR;
transmit the HARQ-ACK on the transmission resource of the HARQ-ACK.

Optionally, the second unit 22 is configured to:
when the start transmission time of the HARQ-ACK is ahead of or equal to the start transmission time of the SR, transmit the HARQ-ACK and the SR simultaneously.

Optionally, the second unit 22 is configured to:
transmit the HARQ-ACK on the transmission resource of the SR with a channel format configured for the SR.

Optionally, the first UCI is HARQ-ACK and the second UCI is SR;
the SR is configured to be transmitted with a first channel format and the HARQ-ACK is configured to be transmitted with a second channel format; or the HARQ-ACK is configured to be transmitted with the first channel format.

Optionally, the second unit 22 is configured to:
when the start transmission time of the HARQ-ACK is ahead of the start transmission time of the SR:
discard the SR; or discard the SR on the overlapped time domain resource between the transmission time domain resource of the SR and the transmission time domain resource of the HARQ-ACK; or discard the SR from the overlapped time domain resource between the transmission time domain resource of the SR and the transmission time domain resource of the HARQ-ACK to the end of the transmission time domain resource of the SR;
transmit the HARQ-ACK on the transmission resource of the HARQ-ACK.

Optionally, the second unit 22 is configured to:
when the start transmission time of the HARQ-ACK is behind or is equal to the start transmission time of the SR, transmit the HARQ-ACK and the SR simultaneously.

Optionally, the second unit 22 is configured to:
transmit the HARQ-ACK on a first transmission resource with a channel format configured for the HARQ-ACK, wherein the first transmission resource is used for transmitting the HARQ-ACK when the SR is present, and the first transmission resource is different from transmission resource for transmitting the HARQ-ACK when SR is not present.

Optionally, the SR is positive SR.

Optionally, the first channel format is PUCCH format 0; and/or, the second channel format is PUCCH format 1.

Optionally, the third channel format is PUCCH format 2; and/or, the fourth channel format is PUCCH format 3; and/or, the fifth channel format is PUCCH format 4.

The apparatus for transmitting the UCI according to the embodiments of the present application may be a terminal-side device, e.g., a UE, or may be a network-side device, e.g., a base station.

An embodiment of the present application provides a computer storage medium for storing the computer program instructions used by the above apparatus, where the computer storage medium includes the program for performing any one of the methods according to the embodiments of the present application described above.

The computer storage medium can be any available media or data storage device accessible to the computer, including but not limited to magnetic memory (e.g., floppy disk, hard disk, magnetic tape, Magnetic Optical disc (MO) or the like), optical memory (e.g., CD, DVD, BD, HVD or the like), semiconductor memory (e.g., ROM, EPROM, EEPROM, nonvolatile memory (NAND FLASH), Solid State Disk (SSD)) or the like.

The methods according to the embodiments of the present application can be applied to the terminal devices, and can also be applied to the network devices.

Here, the terminal device can also referred to as the User Equipment ("UE" for short), Mobile Station ("MS" for short), Mobile Terminal ("MT" for short) or the like. Optionally, the terminal can has the ability of communicating with one or more core networks via the Radio Access Network (RAN). For example, the terminal can be a mobile telephone (or called "cellular" telephone), or a computer with the mobile property. For example, the terminal can also be a portable, pocket, handheld, computer built-in or vehicle-carried mobile device.

The network device can be a base station (e.g., access point), which means the device in the access network communicating with the wireless terminal via one or more sectors over the air interface. The base station may be used to perform the interconversion between the received air frame and the IP packet, and used as the router between the wireless terminal and the rest of the access network, wherein the rest of the access network may include Internet Protocol (IP) networks. The base station may further coordinate the attribute management of the air interface. For example, the base station may be the Base Transceiver Station (BTS) in the GSM or CDMA, or may be the NodeB in the WCDMA, or may be the evolutional Node B (NodeB or eNB or e-NodeB) in the LTE, which is not limited in the embodiments of the invention.

In summary, in the embodiments of the present application, when different UCIs have different start transmission moments and the transmission time domain resources overlap, the UCI that can be transmitted is determined at least according to the relative positions of the start transmission moments of different UCIs and then transmitted, to thereby implement the correct UCI transmission, so that the network side can obtain the UCI in time.

It should be understood by those skilled in the art that the embodiments of the present application can provide methods, systems and computer program products. Thus the present application can take the form of hardware embodiments alone, software embodiments alone, or embodiments combining the software and hardware aspects. Also the present application can take the form of computer program products implemented on one or more computer usable storage mediums (including but not limited to magnetic disk memories, optical memories and the like) containing computer usable program codes therein.

The present application is described by reference to the flow charts and/or the block diagrams of the methods, the devices (systems) and the computer program products according to the embodiments of the present application. It should be understood that each process and/or block in the flow charts and/or the block diagrams, and a combination of processes and/or blocks in the flow charts and/or the block diagrams can be implemented by the computer program instructions. These computer program instructions can be provided to a general-purpose computer, a dedicated computer, an embedded processor, or a processor of another programmable data processing device to produce a machine, so that an apparatus for implementing the functions specified in one or more processes of the flow charts and/or one or more blocks of the block diagrams is produced by the instructions executed by the computer or the processor of another programmable data processing device.

These computer program instructions can also be stored in a computer readable memory which is capable of guiding the computer or another programmable data processing device to operate in a particular way, so that the instructions stored in the computer readable memory produce a manufacture including the instruction apparatus which implements the functions specified in one or more processes of the flow charts and/or one or more blocks of the block diagrams.

These computer program instructions can also be loaded onto the computer or another programmable data processing device, so that a series of operation steps are performed on the computer or another programmable device to produce the computer-implemented processing. Thus the instructions executed on the computer or another programmable device provide steps for implementing the functions specified in one or more processes of the flow charts and/or one or more blocks of the block diagrams.

Evidently those skilled in the art can make various modifications and variations to the present application without departing from the spirit and scope of the present application. Thus the present application is also intended to encompass these modifications and variations therein as long as these modifications and variations to the present application come into the scope of the claims of the present application and their equivalents.

## Claims

1. A method for transmitting Uplink Control Information, UCI, comprising:
determining first UCI and second UCI that need to be transmitted, wherein a transmission time domain resource of the first UCI overlaps with a transmission time domain resource of the second UCI;
transmitting the UCI according to a relative position of start transmission times of the first UCI and the second UCI.

2. The method according to claim 1, wherein the first UCI comprises Hybrid Automatic Repeat reQuest Acknowledge, HARQ-ACK, and/or Scheduling Request, SR, the second UCI comprises periodic Channel State Information, CSI, or semi-persistent CSI or aperiodic CSI, and the first UCI is configured to be transmitted with a first channel format or second channel format.

3. The method according to claim 2, wherein the transmitting the UCI according to the relative positions of start transmission times of the first UCI and the second UCI comprises:
when the start transmission time of the first UCI is behind the start transmission time of the second UCI:
discarding the second UCI; or discarding the CSI on an overlapped time domain resource between a transmission time domain resource of the CSI and the transmission time domain resource of the first UCI; or discarding the CSI from the overlapped time domain resource between the transmission time domain resource of the CSI and the transmission time domain resource of the first UCI to an end of the transmission time domain resource of the CSI;
transmitting the first UCI on a transmission resource of the first UCI.

4. The method according to claim 2, wherein the transmitting the UCI according to the relative position of start transmission times of the first UCI and the second UCI comprises:
when the start transmission time of the first UCI is ahead of or equal to the start transmission time of the CSI, transmitting the first UCI and the CSI simultaneously.

5. The method according to claim 4, wherein the transmitting the first UCI and the CSI simultaneously comprises:
transmitting the first UCI and the CSI simultaneously on a transmission resource of the CSI with a channel format configured for the CSI.

6. The method according to claim 1, wherein the first UCI is HARQ-ACK;
the second UCI comprises periodic CSI and/or SR, or the second UCI comprises semi-persistent CSI and/or SR, or the second UCI comprises aperiodic CSI and/or SR;
the HARQ-ACK is configured to be transmitted with a third channel format or fourth channel format or fifth channel format.

7. The method according to claim 6, wherein the transmitting the UCI according to the relative position of start transmission times of the first UCI and the second UCI comprises:
when the start transmission time of the HARQ-ACK is ahead of the start transmission time of the second UCI:
discarding the second UCI; or discarding the second UCI on an overlapped time domain resource between the transmission time domain resource of the second UCI and a transmission time domain resource of the HARQ-ACK; or discarding the second UCI from the overlapped time domain resource between the transmission time domain resource of the second UCI and the transmission time domain resource of the HARQ-ACK to an end of the transmission time domain resource of the second UCI;
transmitting the HARQ-ACK on a transmission resource of the HARQ-ACK.

8. The method according to claim 6, wherein the transmitting the UCI according to the relative position of start transmission times of the first UCI and the second UCI comprises:
when the start transmission time of the HARQ-ACK is behind or is equal to the start transmission time of the second UCI, transmitting the HARQ-ACK and the second UCI simultaneously.

9. The method according to claim 8, wherein the transmitting the HARQ-ACK and the second UCI simultaneously comprises:
transmitting the HARQ-ACK and the second UCI simultaneously on a transmission resource of the HARQ-ACK with a channel format configured for the HARQ-ACK.

10. The method according to any one of claims 2 to 9, wherein the CSI is configured to be transmitted with a third channel format or fourth channel format or fifth channel format.

11. The method according to claim 1, wherein the first UCI is HARQ-ACK, the second UCI is SR, the HARQ-ACK is configured to be transmitted with a first channel format or second channel format, and the SR is configured to be transmitted with the second channel format.

12. The method according to claim 11, wherein the transmitting the UCI according to the relative position of start transmission times of the first UCI and the second UCI comprises:
when the start transmission time of the HARQ-ACK is behind the start transmission time of the SR:
discarding the SR; or discarding the SR on an overlapped time domain resource between a transmission time domain resource of the SR and a transmission time domain resource of the HARQ-ACK; or discarding the SR from the overlapped time domain resource between the transmission time domain resource of the SR and the transmission time domain resource of the HARQ-ACK to an end of the transmission time domain resource of the SR;
transmitting the HARQ-ACK on a transmission resource of the HARQ-ACK.

13. The method according to claim 11, wherein the transmitting the UCI according to the relative position of start transmission times of the first UCI and the second UCI comprises:
when the start transmission time of the HARQ-ACK is ahead of or equal to the start transmission time of the SR, transmitting the HARQ-ACK and the SR simultaneously.

14. The method according to claim 13, wherein the transmitting the HARQ-ACK and the SR simultaneously comprises:
transmitting the HARQ-ACK on a transmission resource of the SR with a channel format configured for the SR.

15. The method of claim 1, wherein the first UCI is HARQ-ACK and the second UCI is SR;
the SR is configured to be transmitted with a first channel format and the HARQ-ACK is configured to be transmitted with a second channel format; or the HARQ-ACK is configured to be transmitted with the first channel format.

16. The method according to claim 15, wherein the transmitting the UCI according to the relative position of start transmission times of the first UCI and the second UCI comprises:
when the start transmission time of the HARQ-ACK is ahead of the start transmission time of the SR:
discarding the SR; or discarding the SR on an overlapped time domain resource between a transmission time domain resource of the SR and a transmission time domain resource of the HARQ-ACK; or discarding the SR from the overlapped time domain resource between the transmission time domain resource of the SR and the transmission time domain resource of the HARQ-ACK to an end of the transmission time domain resource of the SR;
transmitting the HARQ-ACK on a transmission resource of the HARQ-ACK.

17. The method according to claim 15, wherein the transmitting the UCI according to the relative position of start transmission times of the first UCI and the second UCI comprises:
when the start transmission time of the HARQ-ACK is behind or is equal to the start transmission time of the SR, transmitting the HARQ-ACK and the SR simultaneously.

18. The method according to claim 17, wherein the transmitting the HARQ-ACK and the SR simultaneously comprises:
transmitting the HARQ-ACK on a first transmission resource with a channel format configured for the HARQ-ACK, wherein the first transmission resource is used for transmitting the HARQ-ACK when the SR is present, and the first transmission resource is different from a transmission resource for transmitting the HARQ-ACK when SR is not present.

19. The method according to any one of claims 11 to 18, wherein the SR is positive SR.

20. The method according to any of claims 2 to 5 and 11 to 18, wherein the first channel format is PUCCH format 0; and/or, the second channel format is PUCCH format 1.

21. The method according to any one of claims 6 to 10, wherein:
the third channel format is PUCCH format 2; and/or,
the fourth channel format is PUCCH format 3; and/or,
the fifth channel format is PUCCH format 4.

22. An apparatus for transmitting Uplink Control Information, UCI, comprising:
a memory configured to store program instructions;
a processor configured to invoke the program instructions stored in the memory to perform a process of:
determining first UCI and second UCI that need to be transmitted, wherein a transmission time domain resource of the first UCI overlaps with a transmission time domain resource of the second UCI;
transmitting the UCI according to a relative position of start transmission times of the first UCI and the second UCI.

23. The apparatus according to claim 22, wherein the first UCI comprises Hybrid Automatic Repeat reQuest Acknowledge, HARQ-ACK, and/or Scheduling Request, SR, the second UCI comprises periodic Channel State Information, CSI, or semi-persistent CSI or aperiodic CSI, and the first UCI is configured to be transmitted with a first channel format or second channel format.

24. The apparatus according to claim 23, wherein the processor is configured to:
when the start transmission time of the first UCI is behind the start transmission time of the second UCI:
discard the second UCI; or discard the CSI on an overlapped time domain resource between a transmission time domain resource of the CSI and the transmission time domain resource of the first UCI; or discard the CSI from the overlapped time domain resource between the transmission time domain resource of the CSI and the transmission time domain resource of the first UCI to an end of the transmission time domain resource of the CSI;
transmit the first UCI on a transmission resource of the first UCI.

25. The apparatus according to claim 23, wherein the processor is configured to:
when the start transmission time of the first UCI is ahead of or equal to the start transmission time of the CSI, transmit the first UCI and the CSI simultaneously.

26. The apparatus according to claim 25, wherein the processor is configured to:
transmit the first UCI and the CSI simultaneously on a transmission resource of the CSI with a channel format configured for the CSI.

27. The apparatus according to claim 22, wherein the first UCI is HARQ-ACK;
the second UCI comprises periodic CSI and/or SR, or the second UCI comprises semi-persistent CSI and/or SR, or the second UCI comprises aperiodic CSI and/or SR;
the HARQ-ACK is configured to be transmitted with a third channel format or fourth channel format or fifth channel format.

28. The apparatus according to claim 27, wherein the processor is configured to:
when the start transmission time of the HARQ-ACK is ahead of the start transmission time of the second UCI:
discard the second UCI; or discard the second UCI on an overlapped time domain resource between the transmission time domain resource of the second UCI and a transmission time domain resource of the HARQ-ACK; or discard the second UCI from the overlapped time domain resource between the transmission time domain resource of the second UCI and the transmission time domain resource of the HARQ-ACK to an end of the transmission time domain resource of the second UCI;
transmit the HARQ-ACK on a transmission resource of the HARQ-ACK.

29. The apparatus according to claim 28, wherein the processor is configured to:
when the start transmission time of the HARQ-ACK is behind or is equal to the start transmission time of the second UCI, transmit the HARQ-ACK and the second UCI simultaneously.

30. The apparatus according to claim 29, wherein the processor is configured to:
transmit the HARQ-ACK and the second UCI simultaneously on a transmission resource of the HARQ-ACK with a channel format configured for the HARQ-ACK.

31. The apparatus according to any one of claims 23 to 30, wherein the CSI is configured to be transmitted with a third channel format or fourth channel format or fifth channel format.

32. The apparatus according to claim 22, wherein the first UCI is HARQ-ACK, the second UCI is SR, the HARQ-ACK is configured to be transmitted with a first channel format or second channel format, and the SR is configured to be transmitted with the second channel format.

33. The apparatus according to claim 31, wherein the processor is configured to:
when the start transmission time of the HARQ-ACK is behind the start transmission time of the SR:
discard the SR; or discard the SR on an overlapped time domain resource between a transmission time domain resource of the SR and a transmission time domain resource of the HARQ-ACK; or discard the SR from the overlapped time domain resource between the transmission time domain resource of the SR and the transmission time domain resource of the HARQ-ACK to an end of the transmission time domain resource of the SR;
transmit the HARQ-ACK on a transmission resource of the HARQ-ACK.

34. The apparatus according to claim 31, wherein the processor is configured to:
when the start transmission time of the HARQ-ACK is ahead of or equal to the start transmission time of the SR, transmit the HARQ-ACK and the SR simultaneously.

35. The apparatus according to claim 34, wherein the processor is configured to:
transmit the HARQ-ACK on a transmission resource of the SR with a channel format configured for the SR.

36. The apparatus of claim 22, wherein the first UCI is HARQ-ACK and the second UCI is SR;
the SR is configured to be transmitted with a first channel format and the HARQ-ACK is configured to be transmitted with a second channel format; or the HARQ-ACK is configured to be transmitted with the first channel format.

37. The apparatus according to claim 36, wherein the processor is configured to:
when the start transmission time of the HARQ-ACK is ahead of the start transmission time of the SR:
discard the SR; or discard the SR on an overlapped time domain resource between a transmission time domain resource of the SR and a transmission time domain resource of the HARQ-ACK; or discard the SR from the overlapped time domain resource between the transmission time domain resource of the SR and the transmission time domain resource of the HARQ-ACK to an end of the transmission time domain resource of the SR;
transmit the HARQ-ACK on a transmission resource of the HARQ-ACK.

38. The apparatus according to claim 36, wherein the processor is configured to:
when the start transmission time of the HARQ-ACK is behind or is equal to the start transmission time of the SR, transmit the HARQ-ACK and the SR simultaneously.

39. The apparatus according to claim 38, wherein the processor is configured to:
transmit the HARQ-ACK on a first transmission resource with a channel format configured for the HARQ-ACK, wherein the first transmission resource is used for transmitting the HARQ-ACK when the SR is present, and the first transmission resource is different from a transmission resource for transmitting the HARQ-ACK when SR is not present.

40. The apparatus according to any one of claims 32 to 39, wherein the SR is positive SR.

41. The apparatus according to any of claims 23 to 26 and 32 to 39, wherein the first channel format is PUCCH format 0; and/or, the second channel format is PUCCH format 1.

42. The apparatus according to any one of claims 27 to 31, wherein
the third channel format is PUCCH format 2; and/or,
the fourth channel format is PUCCH format 3; and/or,
the fifth channel format is PUCCH format 4.

43. An apparatus for transmitting Uplink Control Information, UCI, comprising:
a first unit configured to determine first UCI and second UCI that need to be transmitted, wherein a transmission time domain resource of the first UCI overlaps with a transmission time domain resource of the second UCI;
a second unit configured to transmit the UCI according to a relative position of start transmission times of the first UCI and the second UCI.

44. A computer storage medium storing computer executable instructions that, when executed by a computer, cause the computer to perform the method of any one of claims 1-21.
